# EUROPEAN PATENT APPLICATION

(11) **EP 3 934 309 A1**
(43) Date of publication of application: **05.01.2022**
(21) Application number: 20923676.9
(22) Date of filing: 16.07.2020
(51) Int. Cl.: H04W 24/02

(54) **METHOD, TERMINAL AND SYSTEM FOR TRANSCEIVING DATA OVER WIRELESS LOCAL AREA NETWORK, AND NETWORK ACCESS DEVICE**

(30) Priority: 19.05.2020 CN 202010425222
(71) Applicant: Chengdu Xgimi Technology Co., Ltd, Chengdu, Sichuan 610041 (CN)
(72) Inventor: WU, Hao, Sichuan 610041 (CN); XIE, Fang, Sichuan 610041 (CN); LIAO, Yang, Sichuan 610041 (CN)
(74) Representative: Berggren Oy
(86) International application number: PCT/CN2020/102306
(87) International publication number: WO 2021/232568

(57) **Abstract**

Disclosed are a method, terminal, and system for transmitting and receiving data in a wireless local area network, and a network access device. The method for transmitting and receiving data in a wireless local area network includes: a parameter MaxBuffer is configured; a terminal calculates a size of data to be transmitted, in local buffer, and sends a request signaling to the network access device when the size of data is greater than or equal to MaxBuffer; the network access device, after receiving the request signaling, reads parameters in the request signaling, determines whether the terminal operates on multi-link or not, and sends a response signaling that contains determining whether the terminal operates on multi-link or not to the terminal; and the terminal, after receiving the response signaling, reads parameters in the response signaling, and performs data transmitting and receiving according to the read parameters and local capability parameters. In the present disclosure, since a multi-link configuration can be dynamically performed according to detection of service data and link status of networks, wireless resources are reasonably requested while high-rate services are ensured, and resource waste is avoided while service data transmission is ensured.

## Description

### Technical Field

The present disclosure relates to the field of wireless communications, in particular to a method, terminal, and system for transmitting and receiving data in a wireless local area network, and a network access device.

### Background

The 802.11 be network, also called an Extremely High Throughput (EHT) network, achieves extremely high throughput through a series of system characteristics and enhanced functions of multiple mechanisms. As the use of Wireless Local Area Network (WLAN) continues to grow, providing wireless data services in many environments (such as homes, enterprises, and hot spots) becomes increasingly important. In particular, video traffic will continue to be the main type of traffic in many WLAN deployments. Because of the emergence of 4K and 8K videos (uncompressed rate of 20 Gbps), requirements for throughput of these applications are developing. New applications with high throughput and low latency, such as virtual reality or augmented reality, game, remote offices and cloud computing, will increase sharply (for example, a real-time game has a latency of less than 5ms).

Given the high throughput and strict real-time latency requirements of these applications, users expect higher throughput, greater reliability, less latency and jitter, and higher power efficiency when their applications are supported through the WLAN. The users expect improved integration with a Time Sensitive Network (TSN) to support the applications over heterogeneous Ethernet and WLAN. The 802.11 be network is designed to ensure the competitiveness of WLAN by further increasing the total throughput and reducing the latency, while ensuring backward compatibility and coexistence with old technical standards. 802.11 compatible devices operate in frequency bands 2.4 GHz, 5 GHz and 6 GHz.

### Summary

Even terminals that require high-rate data transmission are not always performing services that require high-rate transmission. For example, when a mobile phone or a computer transmits a high-definition video, it may require a very high data transmission rate. However, at other times, resources of high-rate transmission data are not necessary. If data transmission links cannot be managed dynamically, a utilization rate of wireless resources cannot be increased as expected, on the contrary, it will cause great waste.

In order to achieve the above objective, embodiments of the present disclosure provide the following technical solutions.

In a first aspect, a method for transmitting and receiving data in a wireless local area network is provided, including: a parameter MaxBuffer is configured, wherein the MaxBuffer is a data size threshold for determining whether a terminal needs to perform data transmission on multi-link; the terminal calculates a size of data to be transmitted, in local buffer, and sends a request signaling to a network access device when the size of data is greater than or equal to MaxBuffer; the network access device, after receiving the request signaling, reads parameters in the request signaling, determines whether the terminal operates on multi-link or not, and sends a response signaling that contains determining whether the terminal operates on multi-link to the terminal; and the terminal, after receiving the response signaling, reads parameters in the response signaling, and performs data transmitting and receiving according to the read parameters and local capability parameters.

Exemplarily, the terminal may configure the parameter MaxBuffer locally, or receive the parameter MaxBuffer configured by the network access device, from a network access device.

In a possible design method, the request signaling contains a capability parameter Capability configured to indicate whether the terminal supports data transmission on multi-link or not, and buffer parameters Scaling Factor and Buffer size configured to indicate a size of data to be transmitted, in the buffer of the terminal. Here, a method for the network access device to determine whether the terminal operates on multi-link may include: according to values of the buffer parameters Scaling Factor and Buffer Size in the request signaling, the size of data in buffer of the terminal is calculated, herein a calculation method is that the size of data in buffer is equal to Buffer Size multiplied by Scaling Factor; when the size of data calculated is greater than MaxBuffer, and the capability parameter Capability indicates that the terminal supports data transmission on multi-link , a response signaling containing that it is determined that the terminal operates on multi-link is sent to the terminal, herein, exemplarily, the response signaling may be in a form of a control frame, or a management frame, or a data frame, otherwise, a response signaling containing that it is determined that the terminal uses a single link is sent to the terminal; or when the size of data calculated is greater than or equal to MaxBuffer, and the capability parameter Capability indicates that the terminal supports data transmission on multi-link , a response signaling containing that it is determined that the terminal operates on multi-link is sent to the terminal, otherwise, a response signaling containing that it is determined that the terminal uses a single link is sent to the terminal.

In another possible design method, the request signaling contains buffer parameters Scaling Factor and Buffer size configured to indicate a size of data to be transmitted, in buffer of the terminal. Here, a method for the network access device to determine whether the terminal operates on multi-link may include: according to values of the buffer parameters Scaling Factor and Buffer Size in the request signaling, a size of data in buffer of the terminal is calculated, herein a calculation method is that the size of data in buffer is equal to Buffer Size multiplied by Scaling Factor; when the size of data calculated is greater than MaxBuffer, a response signaling containing that it is determined that the terminal operates on multi-link is sent to the terminal, otherwise, a response signaling containing that it is determined that the terminal uses a single link is sent to the terminal; or when the size of data calculated is greater than or equal to MaxBuffer, a response signaling containing that it is determined that the terminal operates on multi-link is sent to the terminal, otherwise, a response signaling containing that it is determined that the terminal uses a single link is sent to the terminal.

In a possible design method, the response signaling contains a parameter ML enable which indicates whether to enable multi-link for data transmission, here, a method for the terminal to perform data transmitting and receiving may include: when a value of the parameter ML enable indicates that multi-link is not enabled for data transmission, data transmitting and receiving is continued to be performed on a current link, and when the value of the parameter ML enable indicates that multi-link is enabled for data transmission, a second link is started to be monitored, and data transmitting and receiving is performed according to local capability parameters.

In a possible design method, the response signaling contains a parameter ML Conf which indicates configuration of an available link, here, a method for the terminal to perform data transmitting and receiving may include: when a value of the parameter ML Conf refers to single-link information, data transmitting and receiving is continued to be performed on a current link, and when the value of the parameter ML Conf refers to multi-link information, a new link in an indicated frequency band is monitored according to the multi-link information in the parameter ML Conf, and data transmitting and receiving is performed according to local capability parameters.

In another possible design method, the response signaling contains a parameter ML enable and a parameter ML Conf; the ML enable indicates whether to enable multi-link for data transmission, and the ML Conf indicates configuration of an available link. Here, a method for the terminal to perform data transmitting and receiving may include: when a value of the parameter ML enable indicates that multi-link is not enabled for data transmission, data transmitting and receiving is continued to be performed on a current link, and when the value of the parameter ML enable indicates that multi-link is enabled for data transmission, a value of ML Conf is read, a new link in an indicated frequency band is monitored according to multi-link information in the parameter ML Conf, and data transmitting and receiving is performed according to local capability parameters.

As an example embodiment, a method for the terminal to perform data transmitting and receiving according to local capability parameters may include: when the terminal supports synchronous transmitting or synchronous receiving, when it monitors that a first link and a second link are both idle, data is synchronously transmitted on two links, herein synchronous transmitting of data refers to that when the terminal transmits a data packet on one link, the other link cannot receive a data packet; and when the terminal supports synchronous transmitting and receiving, when any of the first link and the second link is idle, data is transmitted on this link, herein when a data packet is transmitted on one link, it will not affect the other link to receive a data packet.

In a second aspect, a terminal for transmitting and receiving data in a wireless local area network is provided. The terminal may perform data transmission with a network access device through a first link. The terminal is configured with a parameter MaxBuffer, wherein the MaxBuffer is a data size threshold for determining whether the terminal needs to perform data transmission on multi-link. The terminal includes: a calculating device configured to calculate a size of data to be transmitted, in local buffer; a request signaling sending device configured to, when the size of data calculated by the calculating device is greater than or equal to MaxBuffer, send a request signaling to the network access device which is connected to the terminal through the first link; a response signaling receiving device configured to receive a response signaling sent from the network access device; and a data transmitting and receiving device configured to read parameters in the response signaling and perform data transmitting and receiving according to the read parameters and capabilities of the terminal.

In a possible design method, the data transmitting and receiving device includes a first data transmitting and receiving subdevice. The first data transmitting and receiving subdevice is configured to, when a value of a parameter ML enable in the response signaling indicates that multi-link is not enabled for data transmission, data transmitting and receiving is continued to be performed on a current link, and when the value of the parameter ML enable in the response signaling indicates that multi-link is enabled for data transmission, a second link is started to be monitored, and data transmitting and receiving is performed according to capabilities of the terminal, herein ML enable indicates whether to enable multi-link for data transmission.

In a possible design method, the data transmitting and receiving device includes a second data transmitting and receiving subdevice. The second data transmitting and receiving subdevice is configured to, when a value of a parameter ML Conf in the response signaling refers to single-link information, data transmitting and receiving is continued to be performed on a current link, and when the value of the parameter ML Conf in the response signaling refers to multi-link information, a new link in an indicated frequency band is monitored according to the multi-link information in the parameter ML Conf, and data transmitting and receiving is performed according to local capability parameters, herein ML Conf indicates configuration of an available link.

In another possible design method, the data transmitting and receiving device includes a third data transmitting and receiving subdevice. The third data transmitting and receiving subdevice is configured to, when a value of a parameter ML enable in the response signaling indicates that multi-link is not enabled for data transmission, data transmitting and receiving is continued to be performed on a current link, and when the value of the parameter ML enable in the response signaling indicates that multi-link is enabled for data transmission, a value of the parameter ML Conf in the response signaling is read, a new link in an indicated frequency band is monitored according to multi-link information in the parameter ML Conf, and data transmitting and receiving is performed according to capabilities of the terminal, herein ML enable indicates whether to enable multi-link for data transmission, and ML Conf indicates configuration of an available link.

In a third aspect, a network access device is provided. The network access device may perform data transmission with a terminal through a first link. The network access device is configured with a parameter MaxBuffer, wherein the MaxBuffer is a data size threshold for determining whether a terminal needs to perform data transmission on multi-link. The network access device includes: a request signaling receiving device configured to receive a request signaling sent from the terminal; a determining device configured to read parameters in the request signaling and determine whether the terminal operates on multi-link or not according to the read parameters; and a response signaling sending device configured to send a response signaling that contains a parameter for determining whether the terminal operates on multi-link or not to the terminal.

In a possible design method, the determining device includes a first determining subdevice. The first determining subdevice is configured to, according to values of buffer parameters Scaling Factor and Buffer Size in the request signaling, calculate a size of data in buffer of the terminal, herein a calculation method is that the size of data in buffer is equal to Buffer Size multiplied by Scaling Facto, and the buffer parameters Scaling Factor and Buffer Size are configured to indicate size of data to be transmitted, in buffer of the terminal; and when the size of data calculated is greater than or equal to MaxBuffer, and a capability parameter Capability in the request signaling indicates that the terminal supports data transmission on multi-link , a response signaling containing that it is determined that the terminal operates on multi-link is sent to the terminal, herein the response signaling may be in a form of a control frame, or a management frame, or a data frame, otherwise, a response signaling containing that it is determined that the terminal uses a single link is sent to the terminal, herein the capability parameter Capability indicates whether the terminal supports data transmission on multi-link or not; or when the size of data calculated is greater than or equal to MaxBuffer, and the capability parameter Capability indicates that the terminal supports data transmission on multi-link , a response signaling containing that it is determined that the terminal operates on multi-link is sent to the terminal, otherwise, a response signaling containing that it is determined that the terminal uses a single link is sent to the terminal.

In another possible design method, the determining device includes a second determining subdevice. The second determining subdevice is configured to, according to values of the buffer parameters Scaling Factor and Buffer Size in the request signaling, calculate a size of data in buffer of the terminal, herein a calculation method is that the size of data in buffer is equal to Buffer Size multiplied by Scaling Factor, and the buffer parameters Scaling Factor and Buffer Size are configured to indicate a size of data to be transmitted, in buffer of the terminal; when the size of data calculated is greater than MaxBuffer, a response signaling containing that it is determined that the terminal operates on multi-link is sent to the terminal, otherwise, a response signaling containing that it is determined that the terminal uses a single link is sent to the terminal; or when the size of data calculated is greater than or equal to MaxBuffer, a response signaling containing that it is determined that the terminal operates on multi-link is sent to the terminal, otherwise, a response signaling containing that it is determined that the terminal uses a single link is sent to the terminal.

In a fourth aspect, a system for transmitting and receiving data in a wireless local area network is provided, including: a terminal and a network access device. The terminal is configured with a parameter MaxBuffer which is a data size threshold for determining whether the terminal needs to perform data transmission on multi-link. The terminal is configured to calculate a size of data, to be transmitted, in local buffer, send a request signaling to the network access device when the size of data is greater than or equal to MaxBuffer, receive a response signaling sent from the network access device, read parameters in the response signaling, and perform data transmitting and receiving according to the read parameters and local capability parameters. The network access device is configured to receive the request signaling sent from the terminal, read parameters in the request signaling, determine whether the terminal operates on multi-link or not according to the read parameters, and send the response signaling that contains determining whether the terminal operates on multi-link or not to the terminal.

In the present disclosure, the terminal requests multi-link transmission according to the size of data and capabilities. In order to request multi-link transmission, the terminal is configured with corresponding parameters in the request signaling sent from the network access device, and the network access device sets different contents of the response signaling according to these parameters. The network access device performs parameter configuration in the response signaling for determining whether to use multi-link or not, and the terminal performs data transmitting according to the parameters in the response signaling. In the present disclosure, since multi-link configuration can be dynamically performed according to detection of service data and link status of networks, wireless resources are reasonably requested while high-rate services are ensured, and resource waste is avoided while service data transmission is ensured.

### Brief Description of the Drawings

Fig. 1 is a schematic diagram of a method for transmitting and receiving data in a wireless local area network in the present disclosure.
Fig. 2 is a schematic diagram of a first form of simultaneously transmitting data by a terminal according to an embodiment of the present disclosure.
Fig. 3 is a schematic diagram of a second form of simultaneously transmitting data by a terminal according to an embodiment of the present disclosure.
Fig. 4 is a schematic diagram of data transmitting and receiving when a terminal supports simultaneous transmitting and receiving according an embodiment of the application.

### Detailed Description of the Embodiments

The technical solutions of the present disclosure are described below in combination with the accompanying drawings.

In the embodiments of the present disclosure, the words like "exemplarily" and "for example" are used to serve as example, example illustration or explanation. Any embodiments or designs described as "example" in the present disclosure shall not be construed as being preferred or superior to other embodiments or designs. More exactly, the purpose of using the word "example" is to present the concept in a specific way.

In order to make the objectives, technical solutions, and advantages of the present disclosure more clearly, the present disclosure is further described in detail below with reference to specific embodiments. It is to be understood that the specific embodiments described here are only used for explaining the present disclosure, but not for limiting the present disclosure.

In the following embodiments, STA represents a terminal in the 802.11 wireless local area network, and AP represents an access point in the 802.11 wireless local area network, which is a type of network access devices.

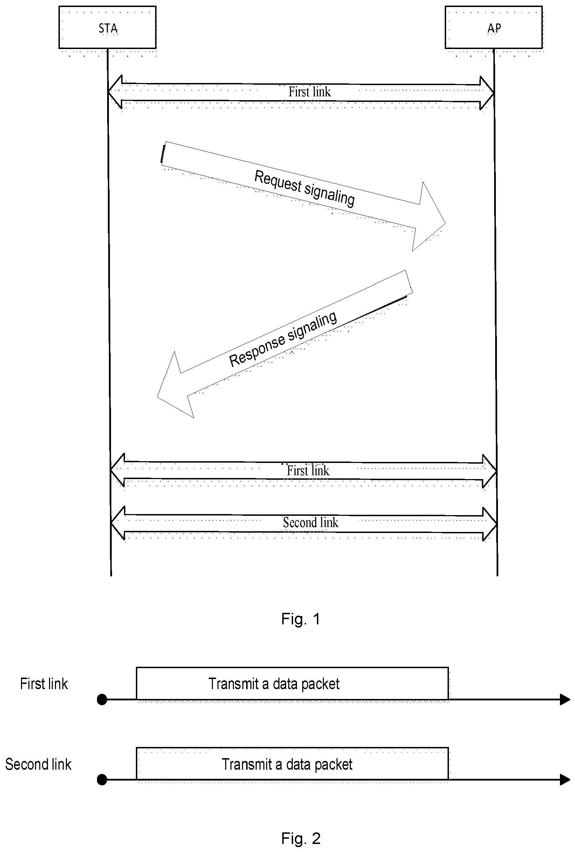

As shown in Fig. 1, a transmission link, namely a first link, is generally provided between STA and AP, for data transmission. STA calculates a size of data, to be transmitted, in local buffer, and when the size of data is greater than or equal to a parameter MaxBuffer configured on STA, sends a request signaling to AP, herein, exemplarily, the parameter MaxBuffer may be in the unit of Kbit, Mbit, or Gbit. After receiving the request signaling, AP reads parameters in the request signaling, determines whether STA uses multi-link or not according to the read parameters, and sends a response signaling containing an identifier for determining whether STA uses multi-link or not to STA. After receiving the response signaling, STA reads parameters in the response signaling, and performs data transmitting and receiving according to the read parameters and local capability parameters.

### Embodiment 1

The embodiment provides a method for transmitting and receiving data in a wireless local area network, including the following steps.

At step 101), STA is configured with a parameter MaxBuffer locally, or AP is configured with a parameter MaxBuffer locally, and STA receives the configured MaxBuffer from AP.

At step 102), a transmission link, namely a first link, has been provided between STA and AP, for data transmission. STA calculates a size of data, to be transmitted, in local buffer, and when the size of data is greater than or equal to MaxBuffer, sends a request signaling to AP, herein the request signaling may be in a form of a control frame, or a management frame, or a data frame, and the request signaling contains a capability parameter for indicating whether STA supports multi-link data transmission or not, a size of data currently to be transmitted of STA, and the like.

Exemplarily, a specific implementation manner of the request signaling is as shown in Table 1.

**Table 1**

| Frame | TID | Scaling Factor | Buffer | Capability | TA | RA |
|---|---|---|---|---|---|---|
| type | | | Size | | | |

Frame type: A type of a current transmission frame. Frame is the unit of data transmitted on a channel. Exemplarily, it can be set as QoS request.

TID: A service identifier, set to a predefined high-rate data transmission service type ID such as 110.

Scaling Factor: A scaling factor, which indicates the unit of Buffer size.

Buffer size: A size of data, to be transmitted, in local buffer.

Capability: Whether STA supports a capability of multi-link data transmission, exemplarily, 00 indicates that the STA does not support the multi-link capability, 01 indicates that STA supports a capability of simultaneous receiving or simultaneous transmitting, and 11 indicates that the STA supports a capability of simultaneous receiving and transmitting.

TA: A Media Access Control (MAC) address of a transmitter, here is set to an MAC address of STA.

RA: An MAC address of a receiver, here is set to an MAC address of AP.

At step 103), after receiving the request signaling, AP reads parameters in a currently transmitted frame, exemplarily, if a value of Capability is not 00 and the size of data in buffer of STA, calculated according to values of Scaling Factor and Buffer Size (a calculating method is that a size of data in buffer is equal to Buffer Size multiplied by Scaling Factor), is greater than or equal to MaxBuffer, AP sends a response signaling to STA, herein the response signaling may be in a form of a control frame, or a management frame, or a data frame, the response signaling contains that it is determined that STA uses multi-link; if the calculated size of data in buffer of STA is less than MaxBuffer, the response signaling contains that it is determined that STA uses a single link. During comparison of the calculated size of data in buffer of STA calculated, alternatively, when it is greater than MaxBuffer, the response signaling contains that it is determined that STA uses multi-link; when it is less than or equal to MaxBuffer, the response signaling contains that it is determined that STA uses a single link; and the difference of the two lies in processing of critical values.

Exemplarily, a specific implementation manner of the response signaling is as shown in Table 2.

**Table 2**

| | | | |
|---|---|---|---|
| Frame Type | ML enable | TA | RA |

Frame type: A type of a current transmission frame. Frame is the unit of data transmitted on a channel. Exemplarily, it can be set as QoSAck.

ML enable: Whether to enable multi-link for data transmission. Exemplarily, setting it to 0 indicates not enabling, and setting it to 1 indicates enabling.

TA: An MAC address of a transmitter, here is set to an MAC address of STA.

RA: an MAC address of a receiver, here is set to an MAC address of AP.

At step 104), after receiving the response signaling, STA reads parameters in a currently transmitted frame. The following are examples.

If a value of the parameter ML enable is set to 0, data transmitting and receiving is continued to be performed on a current link.

If the value of the parameter ML enable is set to 1, monitoring of a second link is started, and data transmitting and receiving is performed according to local capability parameters. Exemplarily, a local capability parameter STA_Capability is set to "STR", which indicates that STA supports simultaneous transmitting and receiving; when it is set to "non-STR", which indicates that STA supports simultaneous transmitting or simultaneous receiving.

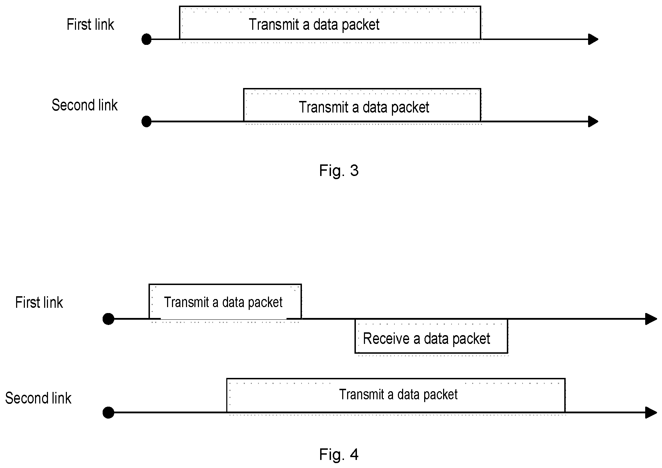

In operation A), if STA supports simultaneous transmitting or simultaneous receiving, when it monitors that a first link and a second link are both idle, simultaneous transmitting of data is performed on two links. The simultaneous transmitting of data refers to that when STA transmits a data packet on one link, the other link cannot receive a data packet, and includes two forms.
i) Transmitting of data packets is started simultaneously, and is ended simultaneously (end times of transmitting of the data packets are the same), as shown in Fig. 2.
ii) Transmitting of data packets is started at different time, but is ended at the same time (end times of transmitting of the data packets are the same), as shown in Fig. 3.

In operation B), if STA supports simultaneous transmitting and receiving, when any of the first link and the second link is idle, transmitting is performed on this link. Moreover, when a data packet is transmitted on one link, it will not affect the other link to receive a data packet.

### Embodiment 2

The embodiment provides a method for transmitting and receiving data in a wireless local area network, including the following steps.

At step 201), STA is configured with a parameter MaxBuffer locally, or AP is configured with a parameter MaxBuffer locally and STA receives the configured MaxBuffer from AP.

At step 202), a transmission link, namely a first link, has been provided between STA and AP, for data transmission. STA calculates a size of data, to be transmitted, in local buffer, and when the size of data is greater than or equal to MaxBuffer, sends a request signaling to AP, herein the request signaling may be in a form of a control frame, or a management frame, or a data frame, and the request signaling contains a capability parameter for indicating whether STA supports multi-link data transmission or not, a size of data currently to be transmitted of STA, and the like.

Exemplarily, a specific implementation manner of the request signaling is as shown in Table 3.

**Table 3**

| | | | | | | |
|---|---|---|---|---|---|---|
| Frame type | TID | Scaling Factor | Buffer Size | Capability | TA | RA |

Frame type: A type of a current transmission frame. Frame is the unit of data transmitted on a channel. Exemplarily, it can be set as QoS request.

TID: A service identifier, set to a predefined high-rate data transmission service type ID such as 110.

Scaling Factor: A scaling factor, which indicates the unit of Buffer size.

Buffer size: A size of data, to be transmitted, in local buffer.

Capability: Whether STA supports a capability of multi-link data transmission, exemplarily, 00 indicates that the STA does not support the multi-link capability, 01 indicates that the STA supports a capability of simultaneous receiving or simultaneous transmitting, and 11 indicates that the STA supports a capability of simultaneous receiving and transmitting.

TA: An MAC address of a transmitter, here is set to an MAC address of STA.

RA: an MAC address of a receiver, here is set to an MAC address of AP.

At step 203), after receiving the request signaling, AP reads parameters in a currently transmitted frame, exemplarily, if a value of Capability is not 00 and the size of data in buffer of STA, calculated according to values of Scaling Factor and Buffer Size (a calculation method is that a size of data in buffer is equal to Buffer Size multiplied by Scaling Factor), is greater than or equal to MaxBuffer, AP sends a response signaling to STA, herein the response signaling may be in a form of a control frame, or a management frame, or a data frame, the response signaling contains that it is determined that STA uses multi-link; if the calculated size of data in buffer of STA is less than MaxBuffer, the response signaling contains that it is determined that STA uses a single link. During comparison of the calculated size of data in buffer of STA, alternatively, when it is greater than MaxBuffer, the response signaling contains that it is determined that STA uses multi-link; when it is less than or equal to MaxBuffer, the response signaling contains that it is determined that STA uses a single link; and the difference of the two lies in processing of critical values.

Exemplarily, a specific implementation manner of the response signaling is as shown in Table 4.

**Table 4**

| | | | |
|---|---|---|---|
| Frame Type | MLConf | TA | RA |

Frame type: A type of a current transmission frame. Frame is the unit of data transmitted on a channel. Exemplarily, it can be set as QoSAck.

ML Conf: Configuration of an available link. Exemplarily, 00 indicates using a current single link, 01 indicates using links in frequency bands of 6GHZ and 5GHZ, 02 indicates using links in frequency bands of 6GHZ and 2.4GHZ, 03 indicates using links in frequency bands of 5GHZ and 2.4GHZ, and 04 indicates using links in frequency bands of 6GHZ, 5GHZ, and 2.4GHZ. The above link configuration is preset. Both STA and AP have matching relations between corresponding identifies and actual link configuration. AP obtains link information (2.4GHZ, or 5GHZ, or 6GHZ) in current data transmitting and receiving according to the request signaling sent from STA, and performs configuration of other links according to the obtained link information. In configuring of two links, configuration of two whole new links may not occur.

TA: An MAC address of a transmitter, here is set to an MAC address of STA.

RA: an MAC address of a receiver, here is set to an MAC address of AP.

At step 204), after receiving the response signaling, STA reads parameters in a currently transmitted frame.

If a value of the parameter ML Conf is set to 00, data transmitting and receiving is continued to be performed using a current link.

If the value of the parameter ML Conf is set to other values, a new link in an indicated frequency band is monitored according to identifier information in the parameter, and data transmitting and receiving is performed according to local capability parameters. For example, when the value of ML Conf is 01, STA uses a link in a frequency band of 6GHZ as a current link for data transmitting and receiving, and starts to monitor and transmit a link in a frequency band of 5GHZ. An STA transmitting mode is shown as follows.

In operation A), if STA supports simultaneous transmitting or simultaneous receiving, when it monitors that a first link and a second link are both idle, simultaneous transmitting of data is performed on two links. The simultaneous transmitting of data refers to that when STA transmits a data packet on one link, the other link cannot receive a data packet, and includes two forms.
i) Transmitting of data packets is started simultaneously, and is ended simultaneously (end times of transmitting of the data packets are the same), as shown in Fig. 2.
ii) Transmitting of data packets is started at different time, but is ended at the same time (end times of transmitting of the data packets are the same), as shown in Fig. 3.

In operation B), if STA supports simultaneous transmitting and receiving, when any of the first link and the second link is idle, transmitting is performed on this link. Moreover, when a data packet is transmitted on one link, it will not affect the other link to receive a data packet.

### Embodiment 3

The embodiment provides a method for transmitting and receiving data in a wireless local area network, including the following steps.

At step 301), STA is configured with a parameter MaxBuffer locally, or AP is configured with a parameter MaxBuffer locally and STA receives the configured MaxBuffer from AP.

At step 302), a transmission link, namely a first link, has been provided between STA and AP, for data transmission. STA calculates a size of data to be transmitted, in local buffer, and when the size of data is greater than or equal to MaxBuffer, sends a request signaling to AP, herein the request signaling may be in a form of a control frame, or a management frame, or a data frame, and the request signaling contains a capability parameter for indicating whether STA supports multi-link data transmission or not, a size of data currently to be transmitted of STA, and the like.

Exemplarily, a specific implementation manner of the request signaling is as shown in Table 5.

**Table 5**

| | | | | | | |
|---|---|---|---|---|---|---|
| Frame type | TID | Scaling Factor | Buffer Size | Capability | TA | RA |

Frame type: A type of a current transmission frame. Frame is the unit of data transmitted on a channel. Exemplarily, it can be set as QoS request.

TID: A service identifier, set to a predefined high-rate data transmission service type ID such as 110.

Scaling Factor: A scaling factor, which indicates the unit of Buffer size.

Buffer size: A size of data, to be transmitted, in local buffer.

Capability: Whether STA supports a capability of multi-link data transmission, exemplarily, 00 indicates that the STA does not support the multi-link capability, 01 indicates that the STA supports a capability of simultaneous receiving or simultaneous transmitting, and 11 indicates that the STA supports a capability of simultaneous receiving and transmitting.

TA: An MAC address of a transmitter, here is set to an MAC address of STA.

RA: an MAC address of a receiver, here is set to an MAC address of AP.

At step 303), after receiving the request signaling, AP reads parameters in a currently transmitted frame, exemplarily, if a value of Capability is not 00 and the size of data in buffer of STA, calculated according to values of Scaling Factor and Buffer Size (a calculation method is that a size of data in buffer is equal to Buffer Size multiplied by Scaling Factor), is greater than or equal to MaxBuffer, AP sends a response signaling to STA, herein the response signaling may be in a form of a control frame, or a management frame, or a data frame, the response signaling contains that it is determined that STA uses multi-link; if the calculated size of data in buffer of STA is less than MaxBuffer, the response signaling contains that it is determined that STA uses a single link. During comparison of the calculated size of data in buffer of STA, alternatively, when it is greater than MaxBuffer, the response signaling contains that it is determined that STA uses multi-link; when it is less than or equal to MaxBuffer, the response signaling contains that it is determined that STA uses a single link; and the difference of the two lies in processing of critical values.

Exemplarily, a specific implementation manner of the response signaling is as shown in Table 6.

**Table 6**

| | | | | |
|---|---|---|---|---|
| Frame Type | MLConf | ML Enable | TA | RA |

Frame type: A type of a current transmission frame. Frame is the unit of data transmitted on a channel. Exemplarily, it can be set as QoSAck.

ML Conf: Configuration of an available link. Exemplarily, 01 indicates using links in frequency bands of 6GHZ and 5GHZ, 02 indicates using links in frequency bands of 6GHZ and 2.4GHZ, 03 indicates using links in frequency bands of 5GHZ and 2.4GHZ, and 04 indicates using links in frequency bands of 6GHZ, 5GHZ, and 2.4GHZ. The above link configuration is preset. Both STA and AP have matching relations between corresponding identifies and actual link configuration. AP obtains link information (2.4GHZ, or 5GHZ, or 6GHZ) in current data transmitting and receiving according to the request signaling sent from STA, and performs configuration of other links according to the obtained link information. In configuring of two links, configuration of two whole new links may not occur.

ML Enable: Whether to enable multi-link for data transmission. For example, setting it to 0 indicates not enabling, and setting it to 1 indicates enabling.

TA: An MAC address of a transmitter, here is set to an MAC address of STA.

RA: an MAC address of a receiver, here is set to an MAC address of AP.

At step 304), after receiving the response signaling, STA reads parameters in a currently transmitted frame.

If a value of the parameter ML Enable is set to 0, data transmitting and receiving is continued to be performed using a current link.

If the value of the parameter ML Enable is set to 1, a value of the parameter ML Conf is read, a new link in an indicated frequency band is monitored according to identifier information in the parameter, and data transmitting and receiving is performed according to local capability parameters. For example, when the value of ML Conf is 01, STA uses a link in a frequency band of 6GHZ as a current link for data transmitting and receiving, and starts to monitor and transmit a link in a frequency band of 5GHZ. An STA transmitting mode is shown as follows.

In operation A), if STA supports simultaneous transmitting or simultaneous receiving, when it monitors that a first link and a second link are both idle, simultaneous transmitting of data is performed on two links. The simultaneous transmitting of data refers to that when STA transmits a data packet on one link, the other link cannot receive a data packet, and includes two forms.
i) Transmitting of data packets is started simultaneously, and is ended simultaneously (end times of transmitting of the data packets are the same), as shown in Fig. 2.
ii) Transmitting of data packets is started at different time, but is ended at the same time (end times of transmitting of the data packets are the same), as shown in Fig. 3.

In operation B), if STA supports simultaneous transmitting and receiving, when any of the first link and the second link is idle, transmitting is performed on this link. Moreover, when a data packet is transmitted on a data packet is transmitted on one link, it will not affect the other link to receive a data packet, as shown in Fig. 4.

### Embodiment 4

The embodiment provides a method for transmitting and receiving data in a wireless local area network, including the following steps.

At step 401), STA is configured with a parameter MaxBuffer locally, or AP is configured with a parameter MaxBuffer locally and STA receives the configured MaxBuffer from AP.

At step 402), a transmission link, namely a first link, has been provided between STA and AP, for data transmission. STA calculates a size of data, to be transmitted, in local buffer, and when the size of data is greater than or equal to MaxBuffer, sends a request signaling to AP, herein the request signaling may be in a form of a control frame, or a management frame, or a data frame, and the request signaling contains a size of data currently to be transmitted of STA, and the like.

Exemplarily, a specific implementation manner of the request signaling is as shown in Table 7.

**Table 7**

| | | | | | |
|---|---|---|---|---|---|
| Frame type | TID | Scaling Factor | Buffer Size | TA | RA |

Frame type: A type of a current transmission frame. Frame is the unit of data transmitted on a channel. Exemplarily, it can be set as QoS request.

TID: A service identifier, set to a predefined high-rate data transmission service type ID such as 110.

Scaling Factor: A scaling factor, which indicates the unit of Buffer size.

Buffer size: A size of data, to be transmitted, in local buffer.

TA: An MAC address of a transmitter, here is set to an MAC address of STA.

RA: an MAC address of a receiver, here is set to an MAC address of AP.

At step 403), after receiving the request signaling, AP reads parameters in a currently transmitted frame, if the size of data in buffer of STA, calculated according to values of Scaling Factor and Buffer Size (a calculation method is that a size of data in buffer is equal to Buffer Size multiplied by Scaling Factor), is greater than or equal to MaxBuffer, AP sends a response signaling to STA, herein the response signaling may be in a form of a control frame, or a management frame, or a data frame, the response signaling contains that it is determined that STA uses multi-link; if the calculated size of data in buffer of STA is less than MaxBuffer, the response signaling contains that it is determined that STA uses a single link. During comparison of the calculated size of data in buffer of STA, alternatively, when it is greater than MaxBuffer, the response signaling contains that it is determined that STA uses multi-link; when it is less than or equal to MaxBuffer, the response signaling contains that it is determined that STA uses a single link; and the difference of the two lies in processing of critical values.

Exemplarily, a specific implementation manner of the response signaling is as shown in Table 8.

**Table 8**

| | | | |
|---|---|---|---|
| Frame Type | ML enable | TA | RA |

Frame type: A type of a current transmission frame. Frame is the unit of data transmitted on a channel. Exemplarily, it can be set as QoSAck.

ML Enable: Whether to enable multi-link for data transmission. For example, setting it to 0 indicates not enabling, and setting it to 1 indicates enabling.

TA: An MAC address of a transmitter, here is set to an MAC address of STA.

RA: an MAC address of a receiver, here is set to an MAC address of AP.

At step 404), after receiving the response signaling, STA reads parameters in a currently transmitted frame. The following are examples.

If a value of the parameter ML enable is set to 0, data transmitting and receiving is continued to be performed on a current link.

if the value of the parameter ML enable is set to 1, monitoring a second link is started, and data transmitting and receiving is performed according to local capability parameters.

In operation A), if STA supports simultaneous transmitting or simultaneous receiving, when it monitors that a first link and a second link are both idle, simultaneous transmitting of data is performed on two links. The simultaneous transmitting of data refers to that when STA transmits a data packet on one link, the other link cannot receive a data packet, and includes two forms.
i) Transmitting of data packets is started simultaneously, and is ended simultaneously (end times of transmitting of the data packets are the same), as shown in Fig. 2.
ii) Transmitting of data packets is started at different time, but is ended at the same time (end times of transmitting of the data packets are the same), as shown in Fig. 3.

In operation B), if STA supports simultaneous transmitting and receiving, when any of the first link and the second link is idle, transmitting is performed on this link. Moreover, when a data packet is transmitted on one link, it will not affect the other link to receive a data packet, as shown in Fig. 4.

### Embodiment 5

The embodiment provides a method for transmitting and receiving data in a wireless local area network, including the following steps.

At step 501), STA is configured with a parameter MaxBuffer locally, or AP is configured with a parameter MaxBuffer locally and STA receives the configured MaxBuffer from AP.

At step 502), a transmission link, namely a first link, has been provided between STA and AP, for data transmission. STA calculates a size of data, to be transmitted, in local buffer, and when the size of data is greater than or equal to MaxBuffer, sends a request signaling to AP, herein the request signaling may be in a form of a control frame, or a management frame, or a data frame, and the request signaling contains a size of data currently to be transmitted of STA, and the like.

Exemplarily, a specific implementation manner of the request signaling is as shown in Table 9.

**Table 9**

| | | | | | |
|---|---|---|---|---|---|
| Frame type | TID | Scaling Factor | Buffer Size | TA | RA |

Frame type: A type of a current transmission frame. Frame is the unit of data transmitted on a channel. Exemplarily, it can be set as QoS request.

TID: A service identifier, set to a predefined high-rate data transmission service type ID such as 110.

Scaling Factor: A scaling factor, which indicates the unit of Buffer size.

Buffer size: A size of data, to be transmitted, in local buffer.

TA: An MAC address of a transmitter, here is set to an MAC address of STA.

RA: an MAC address of a receiver, here is set to an MAC address of AP.

At step 503), after receiving the request signaling, AP reads parameters in a currently transmitted frame, if the size of data in buffer of STA, calculated according to values of Scaling Factor and Buffer Size (a calculation method is that a size of data in buffer is equal to Buffer Size multiplied by Scaling Factor), is greater than or equal to MaxBuffer, AP sends a response signaling to STA, herein the response signaling may be in a form of a control frame, or a management frame, or a data frame, the response signaling contains that it is determined that STA uses multi-link; if the calculated size of data in buffer of STA is less than MaxBuffer, the response signaling contains that it is determined that STA uses a single link. During comparison of the calculated size of data in buffer of STA, alternatively, when it is greater than MaxBuffer, the response signaling contains that it is determined that STA uses multi-link; when it is less than or equal to MaxBuffer, the response signaling contains that it is determined that STA uses a single link; and the difference of the two lies in processing of critical values.

Exemplarily, a specific implementation manner of the response signaling is as shown in Table 10.

**Table 10**

| | | | |
|---|---|---|---|
| Frame Type | MLConf | TA | RA |

Frame type: A type of a current transmission frame. Frame is the unit of data transmitted on a channel. Exemplarily, it can be set as QoSAck.

ML Conf: Configuration of an available link. Exemplarily, 00 indicates using a current single link, 01 indicates using links in frequency bands of 6GHZ and 5GHZ, 02 indicates using links in frequency bands of 6GHZ and 2.4GHZ, 03 indicates using links in frequency bands of 5GHZ and 2.4GHZ, and 04 indicates using links in frequency bands of 6GHZ, 5GHZ, and 2.4GHZ. The above link configuration is preset. Both STA and AP have matching relations between corresponding identifies and actual link configuration. AP obtains link information (2.4GHZ, or 5GHZ, or 6GHZ) in current data transmitting and receiving according to the request signaling sent from STA, and performs configuration of other links according to the obtained link information. In configuring of two links, configuration of two whole new links may not occur.

TA: An MAC address of a transmitter, here is set to an MAC address of STA.

RA: an MAC address of a receiver, here is set to an MAC address of AP.

At step 504), after receiving the response signaling, STA reads parameters in a currently transmitted frame.

If a value of the parameter ML Conf is set to 00, data transmitting and receiving is continued to be performed using a current link.

If the value of the parameter ML Conf is set to other values, a new link in an indicated frequency band is monitored according to identifier information in the parameter, and data transmitting and receiving is performed according to local capability parameters. For example, when the value of ML Conf is 01, STA uses a link in a frequency band of 6GHZ as a current link for data transmitting and receiving, and starts to monitor and transmit a link in a frequency band of 5GHZ. An STA transmitting mode is shown as follows.

In operation A), if STA supports simultaneous transmitting or simultaneous receiving, when it monitors that a first link and a second link are both idle, simultaneous transmitting of data is performed on two links. The simultaneous transmitting of data refers to that when STA transmits a data packet on one link, the other link cannot receive a data packet, and includes two forms.
i) Transmitting of data packets is started simultaneously, and is ended simultaneously (end times of transmitting of the data packets are the same), as shown in Fig. 2.
ii) Transmitting of data packets is started at different time, but is ended at the same time (end times of transmitting of the data packets are the same), as shown in Fig. 3.

In operation B), if the terminal supports simultaneous transmitting and receiving, when any of the first link and the second link is idle, transmitting is performed on this link. Moreover, when a data packet is transmitted on one link, it will not affect the other link to receive a data packet, as shown in Fig. 4.

### Embodiment 6

The embodiment provides a method for transmitting and receiving data in a wireless local area network, including the following steps.

At step 601), STA is configured with a parameter MaxBuffer locally, or AP is configured with a parameter MaxBuffer locally and STA receives the configured MaxBuffer from AP.

At step 602), a transmission link, namely a first link, has been provided between STA and AP, for data transmission. STA calculates a size of data, to be transmitted, in local buffer, and when the size of data is greater than or equal to MaxBuffer, sends a request signaling to AP, herein the request signaling may be in a form of a control frame, or a management frame, or a data frame, and the request signaling contains a size of data currently to be transmitted of STA, and the like.

Exemplarily, a specific implementation manner of the request signaling is as shown in Table 11.

**Table 11**

| | | | | | |
|---|---|---|---|---|---|
| Frame type | TID | Scaling Factor | Buffer Size | TA | RA |

Frame type: A type of a current transmission frame. Frame is the unit of data transmitted on a channel. Exemplarily, it can be set as QoS request.

TID: A service identifier, set to a predefined high-rate data transmission service type ID such as 110.

Scaling Factor: A scaling factor, which indicates the unit of Buffer size.

Buffer size: A size of data, to be transmitted, in local buffer.

TA: An MAC address of a transmitter, here is set to an MAC address of STA.

RA: an MAC address of a receiver, here is set to an MAC address of AP.

At step 603), after receiving the request signaling, AP reads parameters in a currently transmitted frame, if the size of data in buffer of STA, calculated according to values of Scaling Factor and Buffer Size (a calculation method is that a size of data in buffer is equal to Buffer Size multiplied by Scaling Factor), is greater than or equal to MaxBuffer, AP sends a response signaling to STA, herein the response signaling may be in a form of a control frame, or a management frame, or a data frame, the response signaling contains that it is determined that STA uses multi-link; if the calculated size of data in buffer of STA is less than MaxBuffer, the response signaling contains that it is determined that STA uses a single link. During comparison of the calculated size of data in buffer of STA, alternatively, when it is greater than MaxBuffer, the response signaling contains that it is determined that STA uses multi-link; when it is less than or equal to MaxBuffer, the response signaling contains that it is determined that STA uses a single link; and the difference of the two lies in processing of critical values.

Exemplarily, a specific implementation manner of the response signaling is as shown in Table 12.

**Table 12**

| | | | | |
|---|---|---|---|---|
| Frame Type | MLConf | ML Enable | TA | RA |

Frame type: A type of a current transmission frame. Frame is the unit of data transmitted on a channel. Exemplarily, it can be set as QoSAck.

ML Conf: Configuration of an available link. Exemplarily, 01 indicates using links in frequency bands of 6GHZ and 5GHZ, 02 indicates using links in frequency bands of 6GHZ and 2.4GHZ, 03 indicates using links in frequency bands of 5GHZ and 2.4GHZ, and 04 indicates using links in frequency bands of 6GHZ, 5GHZ, and 2.4GHZ. The above link configuration is preset. Both STA and AP have matching relations between corresponding identifies and actual link configuration. AP obtains link information (2.4GHZ, or 5GHZ, or 6GHZ) in current data transmitting and receiving according to the request signaling sent from STA, and performs configuration of other links according to the obtained link information. In configuring of two links, configuration of two whole new links may not occur.

ML Enable: Whether to enable multi-link for data transmission. For example, setting it to 0 indicates not enabling, and setting it to 1 indicates enabling.

TA: An MAC address of a transmitter, here is set to an MAC address of STA.

RA: an MAC address of a receiver, here is set to an MAC address of AP.

At step 604), after receiving the response signaling, STA reads parameters ML Conf and ML Enable in a currently transmitted frame. The following are examples.

If a value of the parameter ML Enable is set to 0, data transmitting and receiving is continued to be performed using a current link.

If the value of the parameter ML Enable is set to 1, a value of the parameter ML Conf is read, a new link in an indicated frequency band is monitored according to identifier information in the parameter, and data transmitting and receiving is performed according to local capability parameters. For example, when the value of ML Conf is 01, STA uses a link in a frequency band of 6GHZ as a current link for data transmitting and receiving, and starts to monitor and transmit a link in a frequency band of 5GHZ. An STA transmitting mode is shown as follows.

In operation A), if STA supports simultaneous transmitting or simultaneous receiving, when it monitors that a first link and a second link are both idle, simultaneous transmitting of data is performed on two links. The simultaneous transmitting of data refers to that when STA transmits a data packet on one link, the other link cannot receive a data packet, and includes two forms.
i) Transmitting of data packets is started simultaneously, and is ended simultaneously (end times of transmitting of the data packets are the same), as shown in Fig. 2.
ii) Transmitting of data packets is started at different time, but is ended at the same time (end times of transmitting of the data packets are the same), as shown in Fig. 3.

In operation B), if STA supports simultaneous transmitting and receiving, when any of the first link and the second link is idle, transmitting is performed on this link. Moreover, when a data packet is transmitted on one link, it will not affect the other link to receive a data packet, as shown in Fig. 4.

### Embodiment 7

The embodiment provides a terminal for transmitting and receiving data in a wireless local area network. The terminal is configured with a parameter MaxBuffer which is a data size threshold for determining whether the terminal needs to perform data transmission on multi-link. The terminal may perform data transmission with a network access device through a first link. The terminal is configured with a parameter MaxBuffer which is a data size threshold for determining whether the terminal needs to perform data transmission on multi-link. The terminal includes: a calculating device configured to calculate a size of data, to be transmitted, in local buffer; a request signaling sending device configured to, when the size of data calculated by the calculating device is greater than or equal to MaxBuffer, send a request signaling to the network access device which is connected to the terminal through the first link; a response signaling receiving device configured to receive a response signaling sent from the network access device; and a data transmitting and receiving device configured to read parameters in the response signaling and perform data transmitting and receiving according to the read parameters and capabilities of the terminal.

As an example embodiment, the data transmitting and receiving device includes a first data transmitting and receiving subdevice. The first data transmitting and receiving subdevice is configured to, if a value of a parameter ML enable in the response signaling indicates that multi-link is not enabled for data transmission, continue to perform data transmitting and receiving on a current link, and if the value of the parameter ML enable in the response signaling indicates that multi-link is enabled for data transmission, start to monitor a second link, and perform data transmitting and receiving according to capabilities of the terminal, herein ML enable indicates whether to enable multi-link for data transmission.

As an example embodiment, the data transmitting and receiving device includes a second data transmitting and receiving subdevice. The second data transmitting and receiving subdevice is configured to, if a value of a parameter ML Conf in the response signaling refers to single-link information, continue to perform data transmitting and receiving on a current link, and if the value of the parameter ML Conf in the response signaling refers to multi-link information, monitor a new link in an indicated frequency band according to the multi-link information in the parameter ML Conf, and perform data transmitting and receiving according to capabilities of the terminal, herein ML Conf indicates configuration of an available link.

As an example embodiment, the data transmitting and receiving device includes a third data transmitting and receiving subdevice. The third data transmitting and receiving subdevice is configured to, if a value of a parameter ML enable in the response signaling indicates that multi-link is not enabled for data transmission, continue to perform data transmitting and receiving on a current link, and if the value of the parameter ML enable in the response signaling indicates that multi-link is enabled for data transmission, monitor a new link in an indicated frequency band according to the multi-link information in the parameter ML Conf, and perform data transmitting and receiving according to capabilities of the terminal, herein ML enable indicates whether to enable multi-link for data transmission, and ML Conf indicates configuration of an available link.

### Embodiment 8

The embodiment provides a network access device. The network access device may perform data transmission with a terminal through a first link. The network access device is configured with a parameter MaxBuffer which is a data size threshold for determining whether the terminal needs to perform data transmission on multi-link. The network access device includes: a request signaling receiving device configured to receive a request signaling sent from the terminal; a determining device configured to read parameters in the request signaling and determine whether the terminal operates on multi-link or not according to the read parameters; and a response signaling sending device configured to send a response signaling that contains a parameter for determining whether the terminal operates on multi-link or not to the terminal.

As an example embodiment, the determining device includes a first determining subdevice. The first determining subdevice is configured to, according to values of buffer parameters Scaling Factor and Buffer Size in the request signaling, calculate a size of data in buffer of the terminal, herein a calculation method is that a size of data in buffer is equal to Buffer Size multiplied by Scaling Facto, the buffer parameters Scaling Factor and Buffer Size are configured to indicate a size of data, to be transmitted, in buffer of the terminal; if the size of data calculated is greater than or equal to MaxBuffer, and a capability parameter Capability in the request signaling indicates that the terminal supports data transmission on multi-link , send a response signaling containing that it is determined that the terminal operates on multi-link to the terminal, herein the response signaling may be in a form of a control frame, or a management frame, or a data frame, otherwise, send a response signaling containing that it is determined that the terminal uses a single link to the terminal, herein the capability parameter Capability indicates whether the terminal supports data transmission on multi-link or not; or if the size of data calculated is greater than or equal to MaxBuffer, and the capability parameter Capability indicates that the terminal supports data transmission on multi-link , send a response signaling containing that it is determined that the terminal operates on multi-link to the terminal, otherwise, send a response signaling containing that it is determined that the terminal uses a single link to the terminal.

As an example embodiment, the determining device includes a second determining subdevice. The second determining subdevice is configured to, according to values of the buffer parameters Scaling Factor and Buffer Size in the request signaling, calculate a size of data in buffer of the terminal, herein a calculation method is that a size of data in buffer is equal to Buffer Size multiplied by Scaling Factor, the buffer parameters Scaling Factor and Buffer Size are configured to indicate a size of data, to be transmitted, in buffer of the terminal; if the size of data calculated is greater than MaxBuffer, send a response signaling containing that it is determined that the terminal operates on multi-link to the terminal, otherwise, send a response signaling containing that it is determined that the terminal uses a single link to the terminal; or if the size of data calculated is greater than or equal to MaxBuffer, send a response signaling containing that it is determined that the terminal operates on multi-link to the terminal, otherwise, send a response signaling containing that it is determined that the terminal uses a single link to the terminal.

### Embodiment 9

The embodiment provides a system for transmitting and receiving data in a wireless local area network is provided, including: a terminal and a network access device. The terminal is configured with a parameter MaxBuffer which is a data size threshold for determining whether the terminal needs to perform data transmission on multi-link. The terminal is configured to calculate a size of data, to be transmitted, in local buffer; send a request signaling to the network access device when the size of data is greater than or equal to MaxBuffer; receive a response signaling sent from the network access device, read parameters in the response signaling, and perform data transmitting and receiving according to the read parameters and local capability parameters. The network access device is configured to receive the request signaling sent from the terminal, read parameters in the request signaling, determine whether the terminal operates on multi-link or not according to the read parameters, and send the response signaling that contains determining whether the terminal operates on multi-link or not to the terminal.

All or part of the above embodiments may be implemented by software, hardware (e.g., circuits), firmware or any other combinations. In case of implementation with the software, all or part of the above embodiments may be implemented in form of a computer program product. The computer program product includes one or more computer instructions or computer programs. When the computer instructions or computer programs are loaded or executed on a computer, the flows, or functions according to the embodiments of the present disclosure are all or partially formed. The computer may be a universal computer, a dedicated computer, a computer network, or another programmable device. The computer instructions may be stored in a computer-readable storage medium or transmitted from one computer-readable storage medium to another computer-readable storage medium. For example, the computer instructions may be transmitted from one website, computer, server or data center to another website, computer, server, or data center in a wireless (for example, infrared, radio and microwave) manner. The computer-readable storage medium may be any available medium accessible for the computer or data storage equipment including one or more integrated available media such as a server and a data center. The available medium may be a magnetic medium (for example, a floppy disk, a hard disk, and a magnetic tape), an optical medium (for example, a Digital Versatile Disc (DVD), or a semiconductor medium. The semiconductor medium may be a solid state drive.

It is to be understood that, in various embodiments of the present disclosure, a magnitude of a sequence number of each process does not mean an execution sequence, part or all of the steps can be executed in parallel or in sequence, and the execution sequence of each process should be determined by its function and an internal logic and should not form any limit to an implementation process of the embodiments of the present disclosure.

Those of ordinary skill in the art may realize that the units and algorithm steps of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Those skilled in the art may realize the described functions for each specific application by use of different methods, but such realization shall fall within the scope of the present disclosure.

Those skilled in the art may clearly learn about that specific working processes of the system, device and unit described above may refer to the corresponding processes in the method embodiment and will not be elaborated herein for convenient and brief description

In some embodiments provided by the present disclosure, it is to be understood that the disclosed system, device, and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the application substantially or parts making contributions to the conventional art or part of the technical solutions may be embodied in form of software product, and the computer software product is stored in a storage medium, including multiple instructions configured to enable a computer device (which may be a personal computer, a server, a network device or a terminal device, etc.) to execute all or part of the steps of the method in each embodiment of the application. The storage media include: various media capable of storing program codes such as a USB flash disk, a mobile hard disk, a ROM, a RAM, a magnetic disk, or a compact disc.

The terms used in the embodiments of the present disclosure are for the purpose of describing particular embodiments only and are not intended to limit the present disclosure. The singular forms "a", "an" and "the" used in the embodiments of the present disclosure and the appended claims of the present disclosure are also intended to include the plural forms unless the context clearly indicates otherwise. It is also to be understood that the term "and/or" as used herein refers to and includes any or all possible combinations of one or more of the associated listed items. The character "/" in the present disclosure usually represents that previous and next associated objects form an "or" relationship.

The term "if" or "in case" used here may be explained as "while" or "when" or "responsive to determining" or "responsive to detecting", which depends on the context. Similarly, based on the context, phrase "if determining" or "if detecting (stated condition or event)" may be explained as "when determining" or "responsive to determining" or "when detecting (stated condition or event)" or "responsive to detecting (stated condition or event)".

Those of ordinary skill in the art may understand that all or part of the steps in the method of the above embodiment may be completed through related hardware instructed by a program, the program may be stored in a readable storage medium of a device, and when the program is executed, all or part of the steps are included. The stored media are, for example, FLASH, EEPROM, etc.

The above are only the specific implementation manners of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

## Claims

1. A method for transmitting and receiving data in a wireless local area network, comprising:
configuring a parameter MaxBuffer which is a data size threshold for determining whether a terminal needs to perform data transmission on multi-link;
calculating by a terminal, a size of data to be transmitted, in a local buffer, and sending a request signaling to a network access device when the size of the data to be transmitted is greater than or equal to the MaxBuffer;
after receiving the request signaling, reading, by the network access device, a parameter in the request signaling, determining whether the terminal operates on multi-link or not according to the read parameter, and sending a response signaling to the terminal, wherein the response signaling indicates whether the terminal operates on multi-link or not; and
after receiving the response signaling, reading, by the terminal, parameters in the response signaling , and performing data transmitting and receiving according to the read parameters and local capability parameters.

2. The method for transmitting and receiving data in the wireless local area network according to claim 1, wherein a method for configuring the parameter MaxBuffer comprises: configuring, by the terminal, the parameter MaxBuffer locally, or receiving the parameter MaxBuffer configured by the network access device, from the network access device.

3. The method for transmitting and receiving data in the wireless local area network according to claim 1, wherein the request signaling contains a capability parameter Capability and buffer parameters Scaling Factor and Buffer Size, the capability parameter Capability is configured to indicate whether the terminal supports data transmission on multi-link or not, and the buffer parameters Scaling Factor and Buffer Size are configured to indicate the size of data to be transmitted, in the buffer of the terminal; a method for the network access device to determine whether the terminal operates on multi-link or not comprises:
according to values of the buffer parameters Scaling Factor and Buffer Size in the request signaling, calculating a size of data in the buffer of the terminal, wherein a calculation method is that the size of data in the buffer is equal to Buffer Size multiplied by Scaling Factor; and
when the size of data calculated is greater than or equal to the MaxBuffer, and the capability parameter Capability indicates that the terminal supports data transmission on multi-link , sending the response signaling to the terminal, wherein the response signaling contains that it is determined that the terminal operates on multi-link.

4. The method for transmitting and receiving data in the wireless local area network according to claim 1, wherein the request signaling contains buffer parameters Scaling Factor and Buffer Size which are configured to indicate the size of data to be transmitted, in the buffer of the terminal; a method for the network access device to determine whether the terminal operates on multi-link comprises:
according to values of the buffer parameters Scaling Factor and Buffer Size in the request signaling, calculating the size of data in buffer of the terminal, wherein a calculation method is that the size of data in buffer is equal to Buffer Size multiplied by Scaling Factor; and
when the size of data calculated is greater than or equal to MaxBuffer, sending the response signaling to the terminal, wherein the response signaling contains that it is determined that the terminal operates on multi-link.

5. The method for transmitting and receiving data in the wireless local area network according to any of claims 1 to 4, wherein the response signaling contains a parameter ML enable which indicates whether to enable multi-link for data transmission; a method for the terminal to perform data transmitting and receiving comprises:
when a value of the parameter ML enable indicates that multi-link is not enabled for data transmission, continuing to perform data transmitting and receiving on a current link; and
when the value of the parameter ML enable indicates that multi-link is enabled for data transmission, starting to monitor a second link, and performing data transmitting and receiving according to local capability parameters.

6. The method for transmitting and receiving data in the wireless local area network according to any of claims 1 to 4, wherein the response signaling contains a parameter ML Conf which indicates configuration of an available link; a method for the terminal to perform data transmitting and receiving comprises:
when a value of the parameter ML Conf refers to single-link information, continuing to use the current link to perform data transmitting and receiving; and
when the value of the parameter ML Conf refers to multi-link information, monitoring a new link in an indicated frequency band according to the multi-link information in the parameter ML Conf, and performing data transmitting and receiving according to local capability parameters.

7. The method for transmitting and receiving data in the wireless local area network according to any of claims 1 to 4, wherein the response signaling contains a parameter ML enable and a parameter ML Conf, the ML enable indicates whether to enable multi-link for data transmission, and the ML Conf indicates configuration of an available link; a method for the terminal to perform data transmitting and receiving comprises:
when a value of the parameter ML enable indicates that multi-link is not enabled for data transmission, continuing to perform data transmitting and receiving on a current link; and
when the value of the parameter ML enable indicates that multi-link is enabled for data transmission, reading a value of the parameter ML Conf, and monitoring a new link in an indicated frequency band according to multi-link information in the parameter ML Conf, and
performing data transmitting and receiving according to local capability parameters.

8. The method for transmitting and receiving data in the wireless local area network according to claim 1, wherein a method for the terminal to perform data transmitting and receiving according to local capability parameters comprises:
when the terminal supports simultaneous transmitting or simultaneous receiving, when it monitors that a first link and a second link are both idle, simultaneously transmitting data on two links, wherein simultaneous transmitting of data refers to that when the terminal transmits a data packet on one link, the other link cannot receive a data packet; and
when the terminal supports simultaneous transmitting and receiving, when any of the first link and the second link is idle, transmitting on this link, wherein when a data packet is transmitted on one link, it will not affect the other link to receive a data packet.

9. A terminal for transmitting and receiving data in a wireless local area network, wherein
a parameter MaxBuffer is configured, wherein the MaxBuffer is a data size threshold for determining whether the terminal needs to perform data transmission on multi-link;
the terminal comprises:
a calculating device configured to calculate a size of data to be transmitted, in local buffer;
a request signaling sending device configured to, when the size of data calculated by the calculating device is greater than or equal to the MaxBuffer, send a request signaling to a network access device which is connected to the terminal through a first link;
a response signaling receiving device configured to receive a response signaling sent from the network access device; and
a data transmitting and receiving device configured to read parameters in the response signaling and perform data transmitting and receiving according to the read parameters and
capabilities of the terminal.

10. The terminal for transmitting and receiving data in the wireless local area network according to claim 9, wherein the data transmitting and receiving device comprises:
a first data transmitting and receiving subdevice configured to, when a value of a parameter ML enable in the response signaling indicates that multi-link is not enabled for data transmission,
continue to perform data transmitting and receiving on a current link, and when the value of the parameter ML enable in the response signaling indicates that multi-link is enabled for data transmission, start to monitor a second link, and perform data transmitting and receiving according to capabilities of the terminal, wherein ML enable indicates whether to enable multi-link for data transmission.

11. The terminal for transmitting and receiving data in the wireless local area network according to claim 9, wherein the data transmitting and receiving device comprises:
a second data transmitting and receiving subdevice configured to, when a value of a parameter ML Conf in the response signaling refers to single-link information, continue to perform data transmitting and receiving on a current link, and when the value of the parameter ML Conf in the response signaling refers to multi-link information, monitor a new link in an indicated frequency band according to the multi-link information in the parameter ML Conf, and perform data transmitting and receiving according to capabilities of the terminal, wherein ML Conf indicates configuration of an available link.

12. The terminal for transmitting and receiving data in the wireless local area network according to claim 9, wherein the data transmitting and receiving device comprises:
a third data transmitting and receiving subdevice configured to, when a value of a parameter ML enable in the response signaling indicates that multi-link is not enabled for data transmission, continue to perform data transmitting and receiving on a current link, and when the value of the parameter ML enable in the response signaling indicates that multi-link is enabled for data transmission, read a value of the parameter ML Conf in the response signaling,
and monitor a new link in an indicated frequency band according to multi-link information in the parameter ML Conf, and perform data transmitting and receiving according to capabilities of the terminal, wherein ML enable indicates whether to enable multi-link for data transmission, and ML Conf indicates configuration of an available link.

13. A network access device, wherein
a parameter MaxBuffer is configured, wherein the MaxBuffer is a data size threshold for determining whether a terminal that is connected to the network access device through a first link needs multi-link to perform data transmission;
the network access device comprises:
a request signaling receiving device configured to receive a request signaling sent from the terminal;
a determining device configured to read parameters in the request signaling and determine whether the terminal operates on multi-link or not according to the read parameters; and
a response signaling sending device configured to send a response signaling that contains a parameter for determining whether the terminal operates on multi-link or not to the terminal.

14. The network access device according to claim 13, wherein the determining device comprises:
a first determining subdevice configured to, according to values of buffer parameters Scaling Factor and Buffer Size in the request signaling, calculate a size of data in buffer of the terminal,
wherein a calculation method is that the size of data in buffer is equal to Buffer Size multiplied by Scaling Facto, and the buffer parameters Scaling Factor and Buffer Size are configured to indicate a size of data to be transmitted, in buffer of the terminal; and
when the size of data calculated is greater than or equal to MaxBuffer, and a capability parameter Capability in the request signaling indicates that the terminal supports data transmission on multi-link , send the response signaling to the terminal, wherein the response signaling contains that it is determined that the terminal operates on multi-link, the capability parameter Capability is configured to indicate whether the terminal supports data transmission on multi-link or not.

15. The network access device according to claim 13, wherein the determining device comprises:
a second determining subdevice configured to, according to values of buffer parameters Scaling Factor and Buffer Size in the request signaling, calculate a size of data in buffer of the terminal, wherein a calculation method is that the size of data in buffer is equal to Buffer Size multiplied by Scaling Facto, and the buffer parameters Scaling Factor and Buffer Size are configured to indicate a size of data to be transmitted, in buffer of the terminal; and
when the size of data calculated is greater than or equal to MaxBuffer, send the response signaling to the terminal, wherein the response signaling contains that it is determined that the terminal operates on multi-link.

16. A system for transmitting and receiving data in a wireless local area network, comprising a terminal and a network access device, wherein the terminal and the network access device perform data transmission through a first link, wherein
the terminal is configured with a parameter MaxBuffer which is a data size threshold for determining whether the terminal needs to perform data transmission on multi-link;
the terminal is configured to calculate a size of data to be transmitted, in local buffer; send a request signaling to a network access device when the size of data is greater than or equal to MaxBuffer; receive a response signaling sent from the network access device, read parameters in the response signaling, and perform data transmitting and receiving according to the read parameters and local capability parameters; and
the network access device is configured to receive the request signaling sent from the terminal, read parameters in the request signaling, determine whether the terminal operates on multi-link or not according to the read parameters, and send the response signaling to the terminal, wherein the response signaling contains determining whether the terminal operates on multi-link or not.
